# EUROPÄISCHE PATENTSCHRIFT

(11) **EP 3 276 186 B1**
(45) Veröffentlichungstag und Bekanntmachung des Hinweises auf die Patenterteilung: **08.12.2021**
(21) Anmeldenummer: 17179935.6
(22) Anmeldetag: 06.07.2017
(51) Int. Cl.: F16B 5/10, F16B 21/02

(54) **DREHVERSCHLUSS**
TURN-LOCK FASTENER
BOUCHON À VIS

(30) Priorität: 25.07.2016 DE 202016104056 U
(43) Veröffentlichungstag der Anmeldung: 31.01.2018
(73) Patentinhaber: Fairchild Fasteners Europe - Camloc GmbH, 65779 Kelkheim (Taunus) (DE)
(72) Erfinder: Trömer, Michael, 64572 Büttelborn (DE)
(74) Vertreter: Keil & Schaafhausen Patentanwälte PartGmbB

(56) Entgegenhaltungen:
- DE-U1- 9 311 243
- DE-U1-202016 102 542
- FR-A1- 2 882 796
- JP-U- H0 263 328

## Beschreibung

Die Erfindung betrifft einen Drehverschluss, insbesondere einen Vierteldrehverschluss, für das lösbare Verbinden von wenigstens zwei Bauteilen. Der Drehverschluss weist ein Verschlusselement mit einer ersten Anlagefläche und einer zweiten Anlagefläche auf, welche mit einem um eine Drehachse drehbaren Verbindungszapfen voneinander beanstandet verbunden sind.

Derartige Drehverschlüsse werden in vielfältiger Weise bspw. zum Befestigen von plattenförmigen Abdeck- oder Verkleidungselementen oder zum Befestigen oder Verbinden beliebiger anderer Bauteile eingesetzt. Der Vorteil derartiger Drehverschlüsse liegt dabei darin, dass diese an einem der Bauteile vormontiert werden können. Für den eigentlichen Befestigungsvorgang ist es dann lediglich erforderlich, den Drehverschluss um einen bestimmten Winkel, insbesondere um 90°, zu drehen.

Bei herkömmlichen Drehverschlüssen weist der Verbindungszapfen an einem seiner Enden einen Kreuzstiftbereich und ein Vorspannelement, meist eine Druckfeder, auf. Während der Vormontage wird der Verbindungszapfen in eine entsprechend ausgestaltete Verschlussaufnahme eingebracht. Wird der Drehverschluss gedreht, hintergreift der Kreuzstiftbereich eine entsprechende Gegenkontur der Verschlussaufnahme, sodass eine Verbindung zwischen mehreren Bauteilen hergestellt wird. Dabei erfolgen sowohl das Einbringen des Verbindungszapfens in die Verschlussaufnahme als auch die Drehung des Drehverschlusses gegen die Federkraft des Vorspannelements. Ein solcher Drehverschluss ist aus der US 2,368,713 bekannt.

Die beschriebene Montage ist vergleichsweise aufwendig, da zunächst der Verbindungszapfen und die Verschlussaufnahme an den jeweiligen Bauteilen angebracht werden müssen. Weiterhin ragen Verbindungszapfen und Verschlussaufnahme nach der Befestigung zumindest auf einer Seite der Bauteile deutlich über diese hinaus, sodass dadurch ein von der Höhe von Verbindungszapfen und Verschlussaufnahme bestimmter Raum freibleiben muss und daher ungenutzt verbleibt. Außerdem wird die Verbindungskraft im Wesentlichen von dem Kreuzstiftbereich getragen, sodass bei Belastung der Verbindung oder des Drehverschlusses lediglich ein flächenmäßig geringer Abschnitt die Verbindung der Bauteile sicherstellt. Aus diesem Grund werden diese Drehverschlüsse oftmals aus Metall gefertigt, was genügend Stabilität der Verbindung bereitstellt, jedoch mit hohen Fertigungskosten einhergeht.

Aus der DE 20 2005 001 451 U1 ist ein Verriegelungselement bekannt, das einen Verbinder für Platten mit einer Halterung, einem Befestigungsteil und einem Bolzen umfasst. Die Halterung weist einen Grundkörper auf, der mit einer Aussparung zur Aufnahme eines Bolzens versehen ist und ferner plattenförmige Flügel zur Abstützung auf der Oberfläche einer Platte umfasst. Der Bolzen ist über einen Lagerstift mit einer exzentrisch angeordneten Sperrscheibe versehen, welche in einer Freigabestellung in die Ausnehmung der Halterung eingesetzt werden kann, und durch Drehung des Bolzens in eine Sperrstellung überführbar ist. In der Sperrstellung untergreift die Sperrscheibe einen Querboden, so dass der Bolzen in einer axialen Lage gehalten wird. Ferner wird durch die Ausnehmung im Querboden ein Führungskanal für den Lagerstift des Bolzens gebildet, wobei die exzentrisch angeordnete Sperrscheibe aus der Ausnehmung heraus verschwenkbar ist. In ähnlicher Weise offenbart die DE 20 2016 102 542 U1 ein Verriegelungselement mit einer exzentrische Anlagefläche, die mit dem Verbindungszapfen verbunden ist und aus einer Duchgangsöffnung mehrerer Bauteile herausgedreht werden kann.

Beiden genannten Schriften ist gemein, dass die Verriegelungskraft von einer exzentrischen Fläche aufgenommen wird. Es hat sich jedoch herausgestellt, dass bei hohen Krafteinwirkungen auf die exzentrische Fläche deren Verbindung zu einem Verbindungszapfen - oder Bolzen verbogen oder gar gebrochen werden kann. Insbesondere für günstig herstellbare Kunststoffteile, kann es im Falle einer exzentrischen Anordnung daher zum Versagen der Verriegelung kommen.

FR 2 882 796 A1 offenbart einen Drehverschluss zum lösbaren Verbinden zweier Bauteile. Der Drehverschluss weist ein Verschlusselement mit einem Verbindungszapfen und einer verschwenkbaren Anlagefläche auf. Eine zweite Anlagefläche wird auf der Unterseite eines Körpers bereitgestellt. Ferner ist der Verbindungszapfen über Rippen innerhalb einer Nabe verdrehsicher gehalten, so dass eine Drehbewegung des Verbindungszapfens nur gegen elastisch gebogenen Balken erfolgen kann.

DE 93 11 243 U1 offenbart ebenfalls einen Drehverschluss zum Verbinden zweier Bauteile. Im ersten Bauteil sind eine Vertiefung und ein Formloch vorgesehen, während das zweite Bauteil ein zweites Formloch aufweist. Der Verschlusszapfen umfasst eine unterhalb des Zapfenkopfes vorgesehene erste Anlagefläche und eine auf Verriegelungsvorsprüngen vorgesehene zweite Anlagefläche.

JP H02 63328 U offenbart einen Drehverschluss für einen Haustiertragekäfig. Der Drehverschluss umfasst ein Verschlusselement mit einer auf der Unterseite des Kopfteils angeordneten ersten Anlagefläche und einer verdrehbaren zweiten Anlagefläche.

US 2015/0248 975 A1 offenbart einen Verschluss zur Verbindung zweier Bauteile, welche unterschiedlich große Durchgangsöffnungen aufweisen. Der Verschluss weist unterhalb einer Federscheibe eine Anlagefläche auf, die mittig über den Stößel mit einem Bolzen verbunden ist. Um den Verschluss auch innerhalb der größeren Durchgangsöffnung einzufassen, ist ein von der gegenüberliegenden Seite einzusetzendes Element vorgesehen, dass Schrägen aufweist auf denen die Bolzen beim Schließen des Verschlusses geführt werden.

Dieser Verschluss lässt sich jedoch nicht von einer Seite montieren, da das einzusetzende Element von einer anderen Seite montiert wird als der Verschluss, weshalb dieser daher für viele Anwendungen ungeeignet ist und jedenfalls nicht benutzerfreundlich ausgestaltet ist.

Aufgabe der vorliegenden Erfindung ist es demgegenüber, einen Drehverschluss der eingangs genannten Art bereit zu stellen, welcher mit einem geringen Montageaufwand vormontiert werden kann, eine hohe Raumausnutzung sicherstellt und gleichzeitig kostengünstig und effizient hergestellt werden kann. Insbesondere soll der Drehverschluss für eine Montage von nur einer Seite aus, bspw. bei einer Frontinstallation, geeignet sein.

Diese Aufgabe wird erfindungsgemäß im Wesentlichen mit einem Drehverschluss mit den Merkmalen des Anspruchs 1 gelöst.

Hierbei ist es erfindungsgemäß vorgesehen, dass der Drehverschluss, insbesondere ein Vierteldrehverschluss, für das lösbare Verbinden von wenigstens zwei, insbesondere plattenförmigen, Bauteilen geeignet ist, wobei die Bauteile jeweils wenigstens eine Durchgangsöffnung aufweisen und zumindest eine der Durchgangsöffnungen in wenigstens einem der Bauteile nicht rotationssymmetrisch ist. Die Durchgangsöffnungen sind passend zum Drehverschluss ausgestaltet, sodass dieser in die Durchgangsöffnungen eingesetzt werden kann. Der Drehverschluss weist ein Verschlusselement mit einer ersten und einer zweiten Anlagefläche auf und umfasst ferner einen um eine Drehachse drehbaren Verbindungszapfen. Der Verbindungszapfen verbindet voneinander beabstandet die beiden Anlageflächen, welche von der Drehachse des Verbindungszapfens radial von diesem wegragen, und ist mittig auf beiden Anlageflächen angeordnet. Ein erfindungsgemäßer Drehverschluss weist ferner wenigstens ein Führungselement auf, das einen sich entlang der Drehachse des Verbindungszapfens erstreckenden Führungskanal aufweist. In dem Führungskanal kann der Verbindungszapfen drehbar gelagert werden. Wird das Verschlusselement relativ zu dem Führungselement verdreht, so kann eine der Anlageflächen aus einer Montageposition in eine Verriegelungsposition verschwenkt werden. In der Montageposition liegt diese verschwenkbare Anlagefläche innerhalb einer von der nicht-rotationssymmetrischen Durchgangsöffnung beschriebenen Umhüllenden. Dadurch, dass die verschwenkbare Anlagefläche in der Montageposition innerhalb der Umhüllenden der nicht-rotations-symmetrischen Durchgangsöffnung liegt, kann der Verschluss bei der Montage und innerhalb der Montageposition in und durch die Durchgangsöffnung gesteckt werden, was eine Vormontage des Drehverschlusses ermöglicht. Erst bei Drehung des Verschlusses und einem Verschwenken der verschwenkbaren Anlagefläche wird diese aus der Umhüllenden der nicht-rotationssymmetrischen Durchgangsöffnung herausgedreht, wodurch die Verriegelungsposition erhalten wird. Eine Verbindung der Bauteile wird durch die die Durchgangsöffnung überragenden Flächenabschnitte der Anlageflächen erreicht.

Die Umhüllende im Sinne der vorliegenden Erfindung ist der Umfang der kleinsten geschlossene Fläche in einer orthogonal zur Drehachse des Verbindungszapfens angeordneten Ebene, die die nicht-rotationssymmetrische Durchgangsöffnung einhüllt. Zur Illustration stelle man sich eine rotationssymmetrische, also kreisförmige (und nicht erfindungsgemäße), Durchgangsöffnung vor. Für eine solche kreisförmige Durchgangsöffnung ist die Umhüllende exakt kreisförmig.

Die mittige Anordnung des Verbindungszapfens auf der ersten und der zweiten Anlagefläche bedeutet, dass der Mittelpunkt des Verbindungszapfens mit dem Flächenschwerpunkt, also dem geometrischen Schwerpunkt, der ersten und der zweiten Anlagefläche zusammenfällt. Ist die erste und/oder zweite Anlagefläche bspw. ellipsoid oder kreisförmig, so liegt der Mittelpunkt der ellipsoiden oder kreisförmigen ersten und/oder zweiten Anlagefläche axial betrachtet auf dem Mittelpunkt des Verbindungszapfens. Ist die erste und/oder zweite Anlagefläche ein Trapez oder ein Rechteck, so liegt der Schwerpunkt der trapezförmigen ersten und/oder zweiten Anlagefläche axial betrachtet auf dem Mittelpunkt des Verbindungszapfens.

Eine solche mittige Anordnung des Verbindungszapfens hat den Vorteil, dass die zur Verbindung der Bauteile aufgewandte und auf die erste und zweite Anlagefläche wirkende Kraft gleichmäßig auf die Verbindung der jeweiligen Anlagefläche zu dem Verbindungszapfen übertragen wird. Dadurch werden auch hohe Kräfte von dem erfindungsgemäßen Drehverschluss aufgenommen und Materialbrüche aufgrund von ungleichmäßiger Belastung einzelner Komponenenten oder Übergänge des Drehverschlusses vermieden. Gleichzeitig kann der erfindungsgemäße Drehverschluss aus weniger stabilen, jedoch günstig herstellbaren und leichten Materialien, bspw. Kunst- oder Verbundstoffe, gefertigt werden, sodass die Herstellungskosten und das Eigengewicht des Drehverschlusses gering gehalten werden.

Das wenigstens eine Führungselement erlaubt es, eine radial zum Verbindungszapfen verlaufende Verschiebung der Bauteile zueinander aufzufangen und zu kompensieren. So können laterale Scherkräfte aufgenommen und eine Verschiebung der Durchgangsöffnungen der Bauteile zueinander verhindert werden. Eine solche Verschiebung ist insbesondere für die Stabilität der Verbindung der Bauteile nachteilhaft, da dies zu einer Verkippung des Drehverschlusses in den Durchgangsöffnungen und im schlimmsten Fall zu einem Lösen der Verbindung der Bauteile führen kann.

In einer bevorzugten Ausführungsform der Erfindung sind die nicht-rotationssymmetrische Durchgangsöffnung und die verschwenkbare Anlagefläche im Wesentlichen, insbesondere zu mindestens 80%, vorzugsweise zu mindestens 90%, besonders bevorzugt zu mindestens 95%, deckungsgleich, wenn diese entlang der Drehachse des Verbindungszapfens im montierten Zustand des Drehverschlusses betrachtet werden. Mit anderen Worten überlappen die maximalen, radial zur Drehachse liegenden Querschnitte der nicht-rotationssymmetrischen Durchgangsöffnung und der verschwenkbaren Anlagefläche zu mindestens 80%, vorzugsweise zu mindestens 90%, besonders bevorzugt zu mindestens 95%, wenn der Drehverschluss in die Durchgangsöffnungen der Bauteile eingesetzt ist und sich in der Montageposition befindet. Mit den maximalen Querschnitten sind diejenigen Querschnitte gemeint, die entlang einer radial zur Drehachse angeordneten Ebene liegen und einen maximalen Flächeninhalt aufweisen, also an derjenigen Position liegen, an der die nicht-rotationssymmetrische Durchgangsöffnung und die verschwenkbare Anlagefläche ihre größte Ausdehnung aufweisen. Dabei ist von Vorteil, dass mit einer höheren Übereinstimmung der Querschnitte in der Montageposition des Drehverschlusses, eine größere Fläche erhalten wird, welche in der Verriegelungsposition über die nicht-rotationssymmetrische Durchgangsöffnung hinausragt und für eine Aufnahme der Verriegelungskraft zur Verfügung steht. So wird eine besonders stabile Verbindung der Bauteile erhalten.

In einer bevorzugten Ausgestaltung greift das wenigstens eine Führungselement in die übereinanderliegenden Durchgangsöffnungen der wenigstens zwei Bauteile ein. Mit anderen Worten entspricht in dieser bevorzugten Variante die axiale Länge des Führungselements in etwa, insbesondere 80% bis 120%, vorzugsweise 90% bis 110%, der Summe der Dicken der zu verbindenden Bauteile. Dies erhöht die zur Aufnahme von lateralen Scherkräften zur Verfügung stehende Fläche am Führungselement, so dass auch hohe Kräfte nicht zu einem Öffnen oder Versagen der Verbindung der Bauteile führen.

Alternativ oder ergänzend dazu kann die Kontur des Führungselements an die Innenkontur der zumindest einen nicht-rotationssymmetrischen Durchgangsöffnung angepasst werden, so dass das Führungselement innerhalb dieser Durchgangsöffnung nur geringfügig verschiebbar ist.

Vorzugsweise sind sowohl die nicht-rotationssymmetrische Durchgangsöffnung als auch die verschwenkbare Anlagefläche derart ausgestaltet, dass beide Flächenabschnitte aufweisen, welche bei montiertem Drehverschluss von der Drehachse des Verbindungszapfens in einer ersten Richtung stärker, d.h. weiter bzw. zu einem größeren Teil, wegragen als in einer zweiten Richtung. Dabei ist sind beide Richtungen in einer Ebene und orthogonal zueinander angeordnet. Bevorzugt ist es, wenn die Gesamtlänge der Durchgangsöffnung und/oder der Anlagefläche in einer ersten Richtung um 10% bis 80%, vorzugsweise um 20% bis 60%, besonders bevorzugt um 30% bis 40%, bezogen auf die Gesamtlänge der Durchgangsöffnung und/oder der Anlagefläche in der zweiten Richtung, erhöht ist.

Besonders bevorzugt ist es, wenn die nicht-rotationssymmetrische Durchgangsöffnung und die verschwenkbare Anlagefläche bei vormontiertem Drehverschluss, entlang der Drehachse des Verbindungszapfens betrachtet, im Wesentlichen rechteckig, ellipsenförmig, oder dreieckig ausgestaltet sind, also einen im Wesentlichen rechteckigen, ellipsenförmigen oder dreieckigen Querschnitt aufweisen. Dabei sollen von der ellipsenförmigen Ausgestaltung der Durchgangsöffnung selbstverständlich keine kreisförmigen Varianten umfasst sein, da diese rotationssymmetrisch und daher nicht Gegenstand der vorliegenden Erfindung sind.

Nach einer weiteren bevorzugten Ausgestaltung der Erfindung ist vorgesehen, dass die erste Anlagefläche zur Anlage auf der Oberseite eines ersten Bauteils oder zur Anlage auf einer, insbesondere scheibenförmigen, Oberseite des Führungselements ausgestaltet ist. Entsprechend wird die Verriegelungskraft in der Verriegelungsposition des Drehverschlusses entweder direkt auf die Oberseite eines ersten Bauteils übertragen oder es findet eine Kraftübertragung auf die Oberseite des Führungselementes statt. Bei der Kraftübertragung auf die Oberseite des Führungselements, ist diese derart ausgestaltet, dass ein Flächenabschnitt über die Durchgangsöffnung hinausragt, sodass die Verriegelungskraft auf das jeweilige Bauteil übertragen werden kann. Als Alternative dazu oder in Kombination mit den erläuterten Ausgestaltungen kann die zweite Anlagefläche zur Anlage auf der Unterseite eines zweiten Bauteils oder zur Anlage auf einer, insbesondere scheibenförmigen, Unterseite des Führungselements ausgestaltet sein. Dabei ist in analoger Weise die Unterseite des Führungselements derart ausgestaltet, dass ein Flächenabschnitt über die Durchgangsöffnung hinausragt, sodass eine Verriegelungskraft auf das jeweilige Bauteil übertragen werden kann. Dabei ist es besonders bevorzugt, wenn entweder die Ober- oder die Unterseite des Führungselements scheibenförmig ausgestaltet ist.

In einer bevorzugten Ausgestaltung ist der Führungskanal mittig in dem Führungselement angeordnet. Mit anderen Worten liegen der Mittelpunkt des Führungskanals und der Schwerpunkt des Führungselements übereinander. Dies führt zu eine besonders stabilen _Lagerung des Verschlusselements in dem Führungselement. Auch können lateral auf das Verschlusselement wirkende Kräfte über den Verbindungszapfen besonders gut vom Führungselement aufgenommen und kompensiert werden.

Vorzugsweise ist die erste und/oder zweite Anlagefläche durch eine Scheibe, insbesondere eine Kreisscheibe, gebildet. Eine scheibenförmige erste und/oder zweite Anlagefläche hat den Vorteil, dass eine relativ große Fläche in der Verriegelungsposition zur Kraftaufnahme zur Verfügung steht. Ferner kann eine geringe Bauhöhe des Drehverschlusses erreicht werden.

Zwischen der ersten Anlagefläche und der zweiten Anlagefläche kann wenigstens ein elastisch verformbares Element vorgesehen sein. Beispielsweise kann auf der der zweiten Anlagefläche zugewandten Seite der ersten Anlagefläche eine Druckfeder und/oder ein nachgiebiges Schaumstoffelement vorhanden sein. Zusätzlich oder alternativ können auf der der ersten Anlagefläche zugewandten Seite der zweiten Anlagefläche eine Druckfeder und/oder ein nachgiebiges Schaumstoffelement vorhanden sein. Dieses elastisch verformbare Element kann in der Verriegelungsposition durch den Kontakt mit den zu verbindenden Bauteilen komprimiert werden. Auf diese Weise lässt sich bspw. ein Klappern der zu verbindenden Bauteile in der Verriegelungsposition verhindern, wenn diese durch das elastisch verformbare Element unter Vorspannung gehalten werden. Zu diesem Zweck kann auch in dem Verbindungszapfen ein elastisch verformbares Element vorgesehen sein.

An dem Verschlusselement und/oder dem Führungselement kann ein Vorsprung ausgebildet sein, der in eine am Führungselement und/oder am Verschlusselement vorgesehene, insbesondere viertelkreisförmige, Aussparung eingreift. Mit anderen Worten ist der Vorsprung am Verschlusselement und die Aussparung am Führungselement vorgesehen, oder umgekehrt. Vorsprung und Aussparung können dabei derart auf einander abgestimmt sein, dass die Drehbewegung des Drehverschlusses auf eine Vierteldrehung begrenzt wird. Dies erlaubt es zwei definierte, maximale Drehstellungen, insbesondere für die Montage- und die Verriegelungsposition, vorzusehen. Ferner wird eine Drehung um 360° und damit ein unbeabsichtigtes Lösen des Verschlusses verhindert.

In Weiterführung dieses Gedankens sind innerhalb der Aussparung axiale Vertiefungen oder Einbuchtungen an den seitlichen Rändern der Aussparung vorgesehen. Im Zusammenspiel mit dem Vorsprung, der vorzugsweise in axialer Richtung an die Form der Vertiefungen oder Einbuchtungen angepasst ist, kann so ein Herausdrehen des Drehverschlusses aus der Montageposition und/oder der Verriegelungsposition erschwert werden. Dafür ist es bevorzugt, die axiale Vertiefungen und den Vorsprung derart anzuordnen, dass diese in der Montageposition und/oder der Verriegelungsposition ineinandergreifen.

Dadurch kann eine taktile Rückkopplung an einen Benutzer erreicht werden, so dass dieser ohne optische Zuhilfenahme das Erreichen der jeweiligen Position erfassen kann und die Bedienung des Drehverschluss vereinfacht wird. Ferner wird ein unbeabsichtigtes Öffnen des Drehverschlusses, insbesondere durch Vibrationen oder Erschütterungen, verhindert. Daher kann durch solche Vertiefungen oder Einbuchtungen die Sicherheit und Stabilität der Verbindung der Bauteile erhöht werden.

Die Abstimmung der axialen Vertiefung der Aussparung auf den Vorsprung kann insbesondere dadurch erfolgen, dass die Vertiefung halbkreisförmig in den Bodenbereich der Aussparung vorgesehen wird, sodass der Vorsprung beim Herausdrehen aus der axialen Vertiefung, insbesondere beim Herausdrehen des Drehverschlusses aus der Montageposition und/oder der Verriegelungsposition, über den Halbkreis angehoben werden muss, wofür eine bestimmte Kraft aufzuwenden ist. Alternativ oder ergänzend dazu ist es möglich, den Übergang von der axialen Vertiefung zu dem übrigen Bereich, der nicht-vertieft ist, mit einer Erhöhung zu versehen, über welche der Vorsprung angehoben werden muss.
In Weiterführung dieses Gedankens ist der Vorsprung parallel oder orthogonal zur Längsachse einer nicht-rotationsförmigen ersten und/oder zweiten Anlagefläche ausgerichtet. Wenn der Vorsprung in die axiale Vertiefung eingreift, ist die erste und/oder zweite Anlagefläche entsprechend der Montageposition und/oder der Verriegelungsposition des Drehverschlusses ausgerichtet. Es ist in diesem Zusammenhang besonders bevorzugt, wenn der Vorsprung am Verbindungszapfen angelegt ist und in Richtung der Längsachse einer nicht-rotationsförmigen ersten und/oder zweiten Anlagefläche ausgerichtet, da dies einfacher in der Herstellung ist und daher die Produktionskosten senkt.

Dabei hat sich als günstig herausgestellt, an dem Verschlusselement und/oder dem Führungselement wenigstens eine Rastnase vorzusehen, die in wenigstens eine am Führungselement und/oder am Verschlusselement vorgesehene Rastmulde in der Montageposition und/oder der Verriegelungsposition eingreift. Beispielsweise soll für eine Rastnase auf der dem Führungselement zugewandten Seite des Verschlusselements eine entsprechend ausgestaltete Rastmulde auf der dem Verschlusselement zugewandten Seite des Führungselements vorgesehen sein. Ebenso ist alternativ oder zusätzlich dazu eine vertauschte Anordnung von Rastnase und Rastmulde denkbar. Dabei können auf dem Führungselement und dem Verschlusselement jeweils eine oder mehrere Rastnasen und/oder Rastmulden vorgesehen sein.

Insbesondere sind die Rastnase und die Rastmulde aufeinander in Position, Form und Größe derart aufeinander abgestimmt, dass der Benutzer eine taktil wahrnehmbare Information über die Drehstellung des Drehverschlusses erhält. Mit anderen Worten wird durch das Eingreifen der Rastnase in die Rastmulde die Drehbewegung des Drehverschlusses an bestimmten Drehstellungen erschwert. So kann es vorgesehen sein, dass die Montageposition und/oder die Verriegelungsposition nur durch Überwindung einer bestimmten, durch das Eingreifen der Rastnase in die Rastmulde vorgegebene, Kraft verlassen bzw. angefahren werden kann bzw. können. Dadurch kann der Benutzer beim Verschließen des Drehverschlusses über den erhöhten Drehwiderstand feststellen, dass die Verriegelungsposition korrekt eingestellt ist. Ebenso erlaubt eine erhöhte Drehkraft zum Verlassen der Montageposition eine Kontrolle des Benutzers beim Drehen des Verschlusses. Außerdem kann durch die Rastnase und -mulde ein unbeabsichtigtes Verlassen der Montageposition während des Einsetzens des Verschlusses in die Durchgangsöffnungen der Bauteile verhindert werden. Dies erhöht die Bedienungsfreundlichkeit des erfindungsgemäßen Drehverschlusses, da das Verlassen der Montageposition ein Einsetzen des Verschlusses in die Durchgangsöffnung verhindern kann.

Es hat sich als günstig herausgestellt, dass das Führungselement ein elastisch verformbares Material, bspw. Polyisopren, umfasst. Wenn das Führungselement in geringem Maße elastisch verformbar ist, lässt sich dieses mit dem Führungskanal leicht auf den Verbindungszapfen aufrasten. Andererseits darf das Führungselement aber nicht zu nachgiebig sein, da es den Führungszapfen relativ zu den zu verbindenden Bauteilen in vorbestimmter Position halten soll.

In einer bevorzugten Ausführungsform, ist der Verbindungszapfen in den Führungskanal des Führungselements festklemmbar, insbesondere einklipsbar. Dies erlaubt ein einfaches Zusammenfügen des Drehverschlusses, ohne dass ein unbeabsichtigtes Trennen von Verschluss- und Führungselement möglich ist.

Weiterhin ist bevorzugt, wenn das Führungselement seitliche Rastmittel, insbesondere federnde Rasthaken oder Rastzungen, aufweist. Über solche Rastmittel kann das Führungselement in wenigstens einem der zu verbindenden Bauteile festgelegt, bspw. vormontiert, werden.

Im Verschlusselement und im Führungselement können Versteifungen vorgesehen werden, die die Festigkeit der Bauteile, insbesondere der ersten und/oder zweiten Anlagefläche, erhöhen. Dadurch kann der Drehverschluss stabiler ausgeführt werden und höheren Kräften widerstehen, wodurch die Verbindung der Bauteile auch bei hohen Kräften sichergestellt ist.

Weitere Merkmale, Vorteile und Anwendungsmöglichkeiten der vorliegenden Erfindung ergeben sich auch aus der nachfolgenden Beschreibung von Ausführungsbeispielen und unter Bezugnahme auf die Zeichnungen.

Es zeigen schematisch:
- Fig. 1a bis 1d: in Seitenansicht (Fig. 1a), Schnittansicht (Fig. 1b) entlang der Schnittebene C-C, Perspektivansicht (Fig. 1c) und Draufsicht (Fig. 1d) ein Verschlusselement,
- Fig. 2a bis 2c: in Seitenansicht (Fig. 2a), in Draufsicht (Fig. 2b) von der Ebene D-D und in Perspektivansicht (Fig. 2c) ein Führungselement,
- Fig. 3a bis 3d: in erster Seitenansicht (Fig. 3a), in zweiter Seitenansicht (Fig. 3b), in erster Perspektivansicht (Fig. 3c) und zweiter Perspektivansicht (Fig. 3d) einen erfindungsgemäßen Drehverschluss in Montageposition mit einem Verschlusselement gemäß den Fig. 1a bis 1d und einem Führungselement gemäß den Fig. 2a bis 2c,
- Fig. 4a bis 4d: in erster Perspektivansicht (Fig. 4a), in zweiter Perspektivansicht (Fig. 4b), in dritter Perspektivansicht (Fig. 4c) und in vierter Perspektivansicht (Fig. 4d) einen erfindungsgemäßen Drehverschluss in Verriegelungsposition mit einem Verschlusselement gemäß den Fig. 1a bis 1d und einem Führungselement gemäß den Fig. 2a bis 2c,
- Fig. 5a: in Draufsicht ein erstes Bauteil mit nichtrotationssymmetrischer Durchgangsöffnung und einem darin eingesetzten, erfindungsgemäßen Drehverschluss in Montageposition,
- Fig. 5b: in Schnittansicht entlang der Ebene A-A zu verbindende Bauteile mit nicht-rotationssymmetrischen Durchgangsöffnungen und einem darin eingesetzten, erfindungsgemäßen Drehverschluss in Montageposition,
- Fig. 5c: in Draufsicht ein zweites Bauteil mit nichtrotationssymmetrischer Durchgangsöffnung und einem darin eingesetzten, erfindungsgemäßen Drehverschluss in Montageposition,
- Fig. 6a: in Draufsicht das erste Bauteil mit nichtrotationssymmetrischer Durchgangsöffnung und einem darin eingesetzten, erfindungsgemäßen Drehverschluss in Verriegelungsposition,
- Fig. 6b: in Schnittansicht entlang der Ebene B-B zu verbindende Bauteile mit nicht-rotationssymmetrischen Durchgangsöffnungen und einem darin eingesetzten, erfindungsgemäßen Drehverschluss in Verriegelungsposition,
- Fig. 6c: in Draufsicht das zweite Bauteil mit nichtrotationssymmetrischer Durchgangsöffnung und einem darin eingesetzten, erfindungsgemäßen Drehverschluss in Verriegelungsposition,
- Fig. 7a bis 7d: in Seitenansicht (Fig. 7a), in Draufsicht (Fig. 7b) entlang der Schnittebene A-A, Perspektivansicht (Fig. 7c) und Draufsicht (Fig. 7d) eine zweite Ausführungsform eines Verschlusselements,
- Fig. 8a bis 8d: in Seitenansicht (Fig. 8a), in erster Draufsicht (Fig. 8b) von der Ebene B-B, in Perspektivansicht (Fig. 8c) und in Detailansicht (Fig. 8d) eine zweite Ausführungsform eines Führungselements,
- Fig. 9a und 9b: in erster Seitenansicht (Fig. 9a) und in zweiter Seitenansicht (Fig. 9b) einen erfindungsgemäßen Drehverschluss in Montageposition mit einem Verschlusselement gemäß den Fig. 7a bis 7d und einem Führungselement gemäß den Fig. 8a bis 8d.

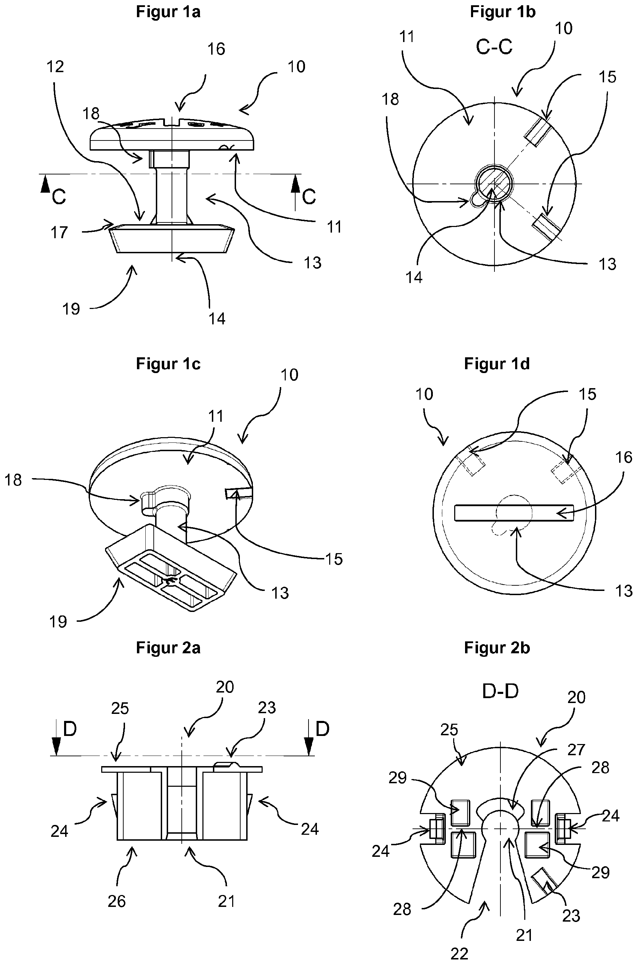

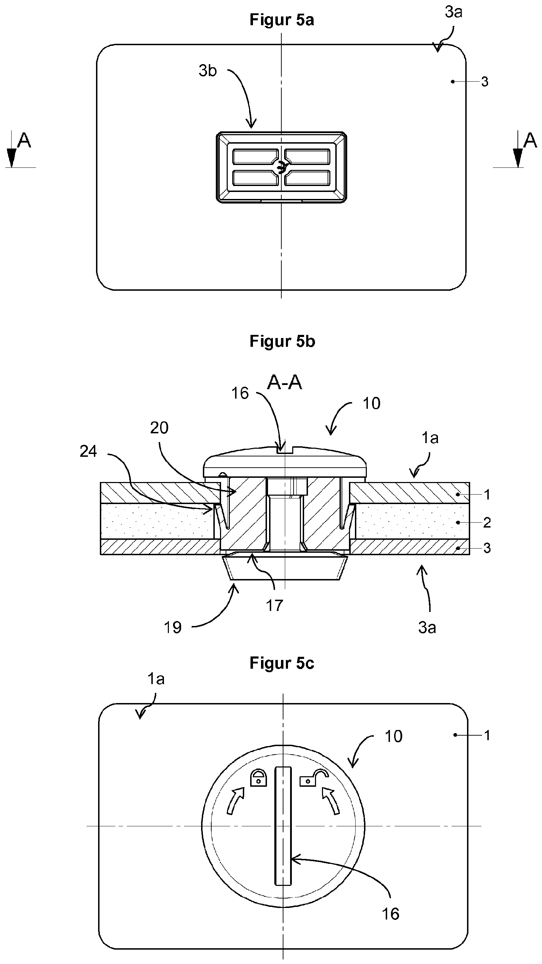

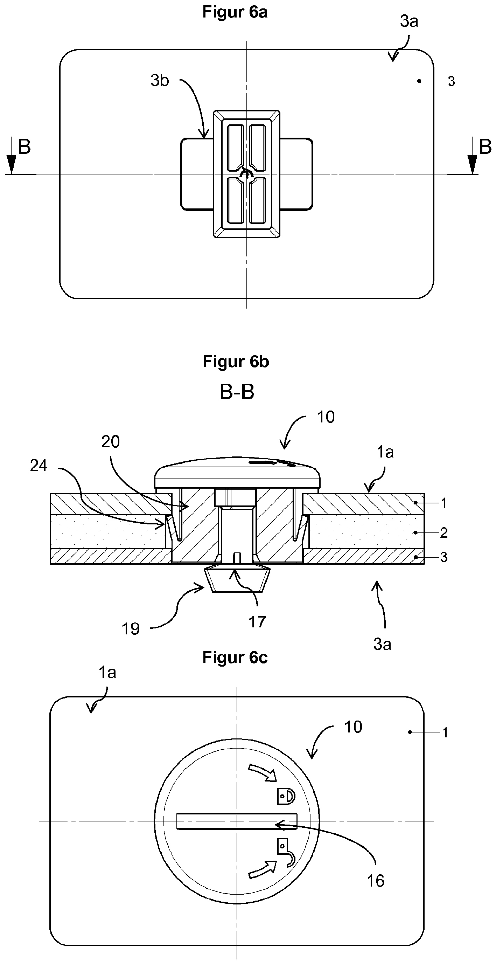

Ein Verschlusselement 10 ist in den Figuren 1a bis 1d dargestellt. Dieses weist eine erste Anlagefläche 11 und eine zweite Anlagefläche 12 auf. Beide sind über den Verbindungszapfen 13 voneinander beabstandet verbunden. Der Verbindungszapfen 13 weist eine Drehachse 14 auf, von der beide Anlageflächen 11, 12 radial wegragen und ist mittig an den Anlageflächen 11 und 12 festgelegt. Die Anlagefläche 11 ist mit Rastmulden 15 versehen, die in den Figuren 1b bis 1c zu erkennen sind, und in Figur 1d durch gestrichelte Linien angedeutet sind. Die Funktion der Rastmulden 15 wird im Zusammenhang mit den Figuren 2a bis 2c näher erläutert. Auf der oberen, der Anlagefläche 11 gegenüberliegenden Seite, ist eine zentral angeordnete, quaderförmige Aussparung 16 vorgesehen, die in Längsrichtung parallel zu der Längsrichtung der zweiten Anlagefläche 12 orientiert ist, sodass die Orientierung der zweiten Anlagefläche 12 auch bei ausschließlicher Betrachtung der Oberseite des Verschlusselements 10, bspw. im vormontierten Zustand des Drehverschlusses, erkennbar ist (Fig. 1d). In der Draufsicht sind die in Figur 1a an der Oberseite des Verschlusselements 10 erkennbaren Symbole nicht dargestellt. Diese Symbole sind aus der Draufsicht der Figuren 5c und 6c deutlich erkennbar. Die zweite Anlagefläche 12 weist auf ihrer, der ersten Anlagefläche 11 zugewandten Oberseite eine Abschrägung 17 auf, deren Struktur und Funktionalität im Zusammenhang mit den Figuren 6a bis 6c genauer erläutert wird. In der dargestellten Ausführungsform bildet die der ersten Anlagefläche 11 zugewandten Oberseite eines Sockels 19 die zweite Anlagefläche 12.

Der Verbindungszapfen 13 ist an seinem an die erste Anlagefläche 11 angrenzenden Ende mit einem Vorsprung 18 ausgebildet. Dieser ist in der gezeigten Ausführungsform im radial zu dem Verbindungszapfen liegenden Querschnitt in etwa halbreisförmig. Die Funktion des Vorsprungs 18 wird im Zusammenhang mit den Figuren 2a bis 2c genauer erläutert.

Das in den Figuren 2a bis 2c gezeigte Führungselement 20 weist einen Führungskanal 21 auf, in welchen der Verbindungszapfen 13 des Verschlusselements 10 eingeklipst werden kann. Dies wird in dieser Variante dadurch erreicht, dass der Führungskanal 21 eine radiale Öffnung aufweist, die sich um etwas weniger als 180° erstreckt. Zum Einsetzen des Verbindungszapfens 13 in den Führungskanal 21 ist eine am Besten in Figur 2b erkennbare seitliche Aussparung 22 im Führungselement 20 vorgesehen, welche trichterförmig in Richtung des Führungskanals 21 enger wird, sodass beim seitlichen Einsetzen in den Führungskanal 21 der Verbindungszapfen 13 geführt wird. Dadurch wird das Zusammenfügen von Verschlusselement 10 und Führungselement 20 erleichtert.

Am Führungselement 20 ist eine Rastnase 23 vorgesehen, die in die Rastmulden 15 des Verschlusselementes 10 eingreifen kann. Sind Verschluss- und Führungselement 10 und 20, durch Einsetzen des Verbindungszapfens 13 in den Führungskanal 21, zusammengefügt, so greift die Rastnase 23 in der Montage- und in der Verriegelungsposition in jeweils eine der Rastmulden 15 ein. Beim Verdrehen des Drehverschlusses von der Montage- in die Verriegelungsposition (und umgekehrt) muss durch das Eingreifen der Rastnase 23 in die jeweilige Rastmulde 15 ein erhöhter Drehwiderstand überwunden werden. Dies hat den Vorteil, dass ein Benutzer des Drehverschlusses eine taktile Information über das Verriegeln und Lösen des Verschlusses erhält, sodass dieser eine korrekte Drehstellung kontrollieren kann. Ferner kann ein unbeabsichtigtes Verdrehen verhindert werden, da ein erhöhter Drehwiderstand überwunden werden muss. Dies ist insbesondere beim Einsetzen des Drehverschlusses in die jeweilige Durchgangsöffnung der Bauteile von Vorteil, da ein unbeabsichtigtes Verdrehen in die Verriegelungsposition das Einsetzen des Verschlusses in die Durchgangsöffnung verhindern kann.

Das Führungselement 20 umfasst außerdem Rastvorsprünge 24, welche in diesem Fall an zwei sich gegenüberliegenden Seiten des Führungselements 20 positioniert sind. In der gezeigten Ausführungsform sind die Rastvorsprünge 24 als schräg nach oben stehende Zungen ausgebildet, welche das Führungselement 20 und damit den Drehverschluss in den Durchgangsöffnungen der zu verbindenden Bauteile zusätzlich fixieren. Die genaue Wirkung der Rastvorsprünge 24 wird im Zusammenhang mit den Figuren 5a bis 5c weiter unten erläutert.

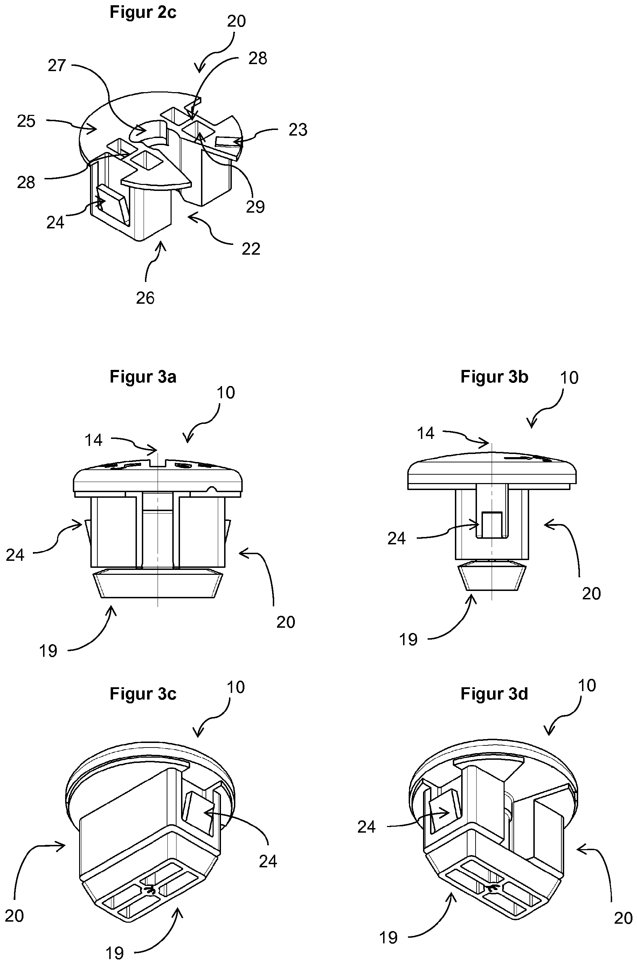

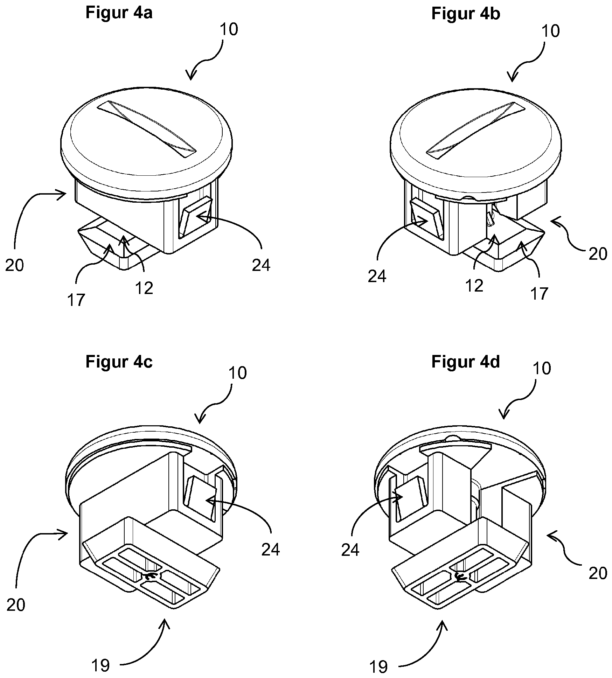

Insbesondere aus der Figur 2a wird deutlich, dass in der gezeigten Ausführungsform das Führungselement 20 auf der Oberseite 25 eine scheiben- oder tellerförmige Erweiterung aufweist. Die Oberseite ist, von der seitlichen Aussparung 22 abgesehen, im Wesentlichen kreisförmig ausgeführt, wobei der von der Oberfläche 25 beschriebene Flächenabschnitt im Wesentlichen mit demjenigen der ersten Anlagefläche 11 übereinstimmt (siehe Figuren 3a bis 3d und 4a bis 4d). Daher sind die erste Anlagefläche 11 sowie die Oberseite 25 entlang der Drehachse 14 betrachtet im Wesentlichen deckungsgleich. Die Unterseite 26 des Führungselementes 20 ist in der dargestellten Ausführungsform im Wesentlichen rechteckig ausgeführt und in der Montageposition entlang der Drehachse 14 des Verbindungszapfens 13 betrachtet im Wesentlichen deckungsgleich zur zweiten Anlagefläche 12 (siehe Figuren 3a bis 3d). An den Führungskanal 21 angrenzend weist das Führungselement 20 eine viertelkreisförmige Aussparung 27 auf, in welche der am Verschlusselement vorgesehene Vorsprung 18 im zusammengefügten Zustand eingreift. Durch das Eingreifen des Vorsprungs 18 in die viertelkreisförmige Aussparung 27 wird die Drehbewegung des Drehverschlusses auf etwa 90° begrenzt, so dass ein unbeabsichtigtes Weiterdrehen des Verschlusses verhindert wird. Schließlich sind insbesondere aus den Figuren 2b und 2c Versteifungsstege 28 zu erkennen, welche zwischen Aussparungen 29 angeordnet sind. Durch die Versteifungsstege 28 wird in die Stabilität des Führungselementes 20 und damit die des Drehverschlusses erhöht. Dadurch kann ein besonders stabiler Drehverschluss erreicht werden, welcher auch bei hohen Krafteinwirkungen eine Verbindung der Bauteile sicherstellt.

Wie aus den Figuren 2a und 2c zu erkennen, ist der an die Oberseite 25 angrenzende Bereich des Führungselements 20 an die Kontur der nicht-rotationssymmetrischen Durchgangsöffnung (s. Figur 5a, 5b, 6a und 6b) angepasst, so dass das Führungselement 20 mit wenig Spiel von der nicht-rotationssymmetrischen Durchgangsöffnung eingefasst ist und eine Bewegung des Führungselements 20 innerhalb der Durchgangsöffnungen der Bauteile 1, 2 und 3 auf ein Minimum beschränkt ist.

In den Figuren 3a bis 3d ist der erfindungsgemäße Drehverschluss aus unterschiedlichen Blickwinkeln in Perspektivansicht in der Montageposition gezeigt. Insbesondere ist zu erkennen, dass die erste Anlagefläche 11 und die Oberseite 25 des Führungselementes 20 sowie die die zweite Anlagefläche 12 und die Unterseite 26 des Führungselementes 20 entlang der Drehachse 14 betrachtet im Wesentlichen deckungsgleich ausgeführt sind.

In den Figuren 4a bis 4d ist der erfindungsgemäße Drehverschluss in der Verriegelungsposition gezeigt, wobei auf eine Darstellung der Symbole auf der Oberseite des Verschlusselements verzichtet wurde. Dabei ist die zweite Anlagefläche 12 des Verschlusselements 10 relativ zu dem Führungselement 20 verschwenkt. Insbesondere sind in den Figuren 4a und 4b auch die Abschrägungen 17 zu erkennen, welche von der Drehachse 14 des Verbindungszapfens 13 gesehen zu den Rändern der Anlagefläche 12 hin abfallen.

Die Figuren 5a bis 5c zeigen unterschiedliche Ansichten des erfindungsgemäßen Drehverschlusses zusammen mit den zu verbindenden Bauteilen 1, 2 und 3, wobei der Drehverschluss in nicht-rotationssymmetrische Durchgangsöffnungen der Bauteile 1, 2 und 3 eingesetzt wurde. In der in Figur 5a gezeigten Draufsicht auf die Oberfläche 3a des Bauteils 3 ist erkennbar, dass die zweite Anlagefläche 12 in der gezeigten Montageposition innerhalb der Umhüllenden der nicht-rotationssymmetrischen Durchgangsöffnung 3b liegt. Für die dargestellte Ausführungsform sind die Durchgangsöffnung 3b und die zweite Anlagefläche 12 auch im Wesentlichen deckungsgleich, wie sich insbesondere aus den Figuren 5a und 5b ergibt. In der in Figur 5b dargestellten Schnittansicht wird insbesondere die Verrastung des Drehverschlusses in den Durchgangsöffnungen der Bauteile 1, 2 und 3 durch die Rastvorsprünge 24 deutlich. Die Rastvorsprünge drücken von der Innenseite der Durchgangsöffnungen heraus gegen zumindest eines der Bauteile 1, 2 und/oder 3 und erreichen dadurch eine Verrastung des Drehverschlusses. In der hier gezeigten Ausführungsform ist zusätzlich das Bauteil 2 aus einem elastischen Material gefertigt, sodass die Rastvorsprünge 24 dieses in radialer Richtung von der Drehachse 14 wegdrücken. Dadurch hintergreifen die Rastvorsprünge 24 das Bauteil 1 auf der der Oberfläche 1a gegenüberliegenden Seite, sodass der Drehverschluss nur unter hohem Kraftaufwand, insbesondere nicht ohne eine nicht-elastische oder gar destruktive Verformung der Rastvorsprünge 24, aus den Durchgangsöffnungen entfernt werden kann.

Die Figur 5c zeigt in Draufsicht das Bauteil 1 und das Verschlusselement 10 mit Aussparung 16, wobei zur Information des Benutzers die Drehrichtungen zur Verriegelung und zum Lösen der Verbindung durch Symbole auf der Oberseite des Verschlusselements erkennbar gemacht werden.

Die Figuren 6a bis 6c zeigen im Vergleich zu den Figuren 5a bis 5c in analoger Weise einen erfindungsgemäßen Drehverschluss, jedoch in der Verriegelungsposition. Insbesondere aus der Draufsicht auf das Bauteil 3 (Figur 6a) wird deutlich, dass durch Verschwenken der zweiten Anlagefläche 12 aus der Umhüllenden der nicht-rotationssymmetrischen Durchgangsöffnung 3b eine Verbindung zwischen den Bauteilen 1, 2 und 3 erreicht wird. Beim Verdrehen aus der Montageposition in die Verriegelungsposition, wird die Oberfläche 3a des Bauteils 3 auf einer der Abschrägungen 17 geführt und es wird so ein Verspannen der Bauteile 1 und 3 zueinander während des Verschwenkens erreicht. Entsprechend steigt die für die Verbindung der Bauteile 1 und 3 aufgebrachte Kraft beim Verriegeln des Drehverschlusses an.

Wie sich insbesondere aus den Figuren 5b und 6b ergibt, entspricht die axiale Ausdehnung des Führungselements 20 der Summe der Dicken der Bauteile 1, 2 und 3, so dass das Führungselement 20 laterale Scherkräfte aufnehmen und kompensieren kann.

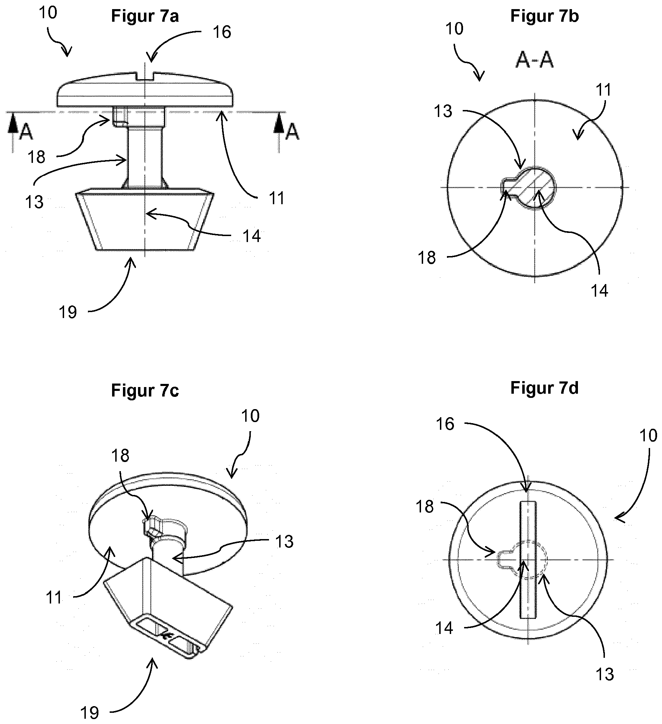

Das in den Figuren 7a bis 7d dargestellte Verschlusselement 10 entspricht in vielen Aspekten der in den Figuren 1a bis 1d gezeigten Ausführungsform, weshalb insoweit auf die obige Beschreibung verweisen und im Folgenden die Unterschiede zur in den Figuren 1a bis 1d gezeigten Ausführungsform erläutert werden.

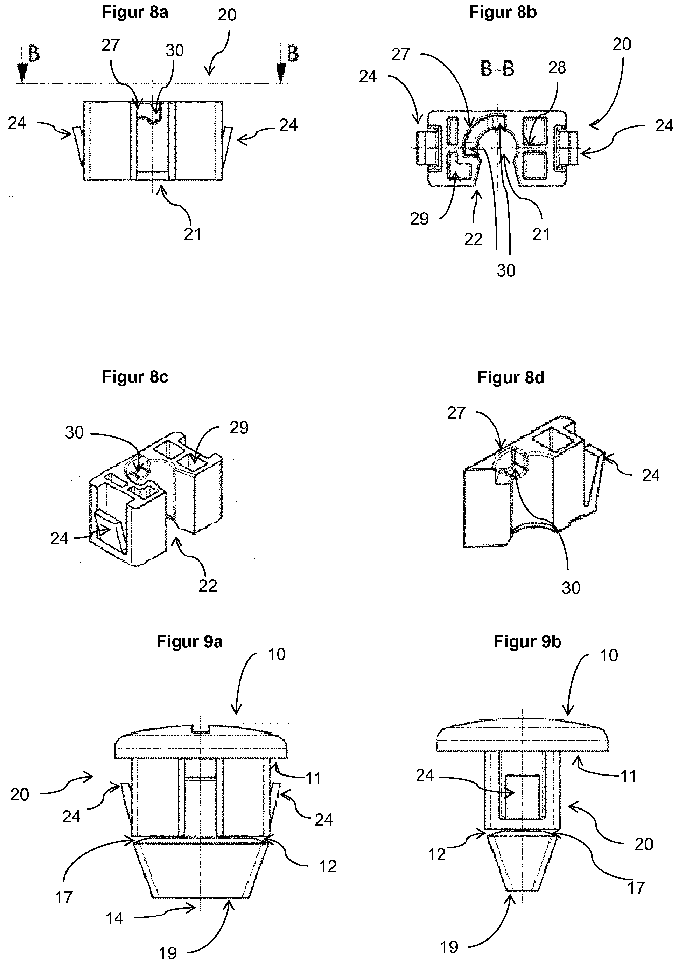

Das in den Figuren 7a bis 7d dargestellte Verschlusselement 10 weist ein vergrößerten Sockel 19 auf, welcher von der ersten Anlagefläche 11 und entlang der Drehachse 14 betrachtet keilförmig zuläuft. Diese Form des Sockels 19 erlaubt eine besonders hohe Kraftaufnahme in axialer Richtung durch die zweite Anlagefläche 12. Ferner ist der Anschlag 18 in Richtung der zweiten Anlagefläche 12 zulaufend ausgestaltet, wobei die genaue Funktion dieser bevorzugten Ausgestaltung des Anschlags 18 im Zusammenhang mit den Figuren 8a bis 8d weiter unten erläutert wird.

Schließlich sind bei dem in den Figuren 7a bis 7d dargestellten Verschlusselement 10 keine Rastmulden 15 vorgesehen, was die Konstruktion der ersten Anlagefläche 11 vereinfacht.

Die Figuren 8a bis 8d zeigen eine weitere Ausführungsform des Führungselements 20, das im Vergleich zu der in den Figuren 2a bis 2d gezeigten Ausführungsform keine scheibenförmige Oberseite 25 aufweist und in seiner Kontur an die Form der nicht-rotationssymmetrischen Durchgangsöffnung 3b angepasst ist.

Ferner ist in der Aussparung 27 zumindest eine axiale Vertiefung 30 vorgesehen, welche auf den Vorsprung 18 des Verschlusselements 10 gemäß der Figuren 7a bis 7d abgestimmt ist, sodass ein Herausdrehen des Drehverschlusses aus der Montage- und/oder Verriegelungsposition erschwert wird. Wie insbesondere in der Figur 8b zu erkennen, ist jeweils eine axiale Vertiefung 30 an den radialen Rändern der Aussparung 27 vorgesehen. Diese Anordnung der jeweiligen axialen Vertiefungen 30 entspricht der Montage- bzw. der Verriegelungsposition des Drehverschlusses, wozu in dem dargestellten Fall der Vorsprung 18 des Verschlusselements 10 entlang der Längsachse der zweiten Anlagefläche 12 bzw. des Sockels 19 ausgebildet ist.

Das Herausdrehen des Drehverschlusses aus der Montage- und/oder Verriegelungsposition erfordert ein Anheben des Vorsprungs 18 des Verschlusselements 10 über die seitlichen Ränder der jeweiligen axialen Vertiefung 30 hinaus, was entlang der Schrägen des keilförmigen Vorsprungs 18 erfolgt. Alternativ kann der Vorsprung 18 ebenso wie die axiale Vertiefung 30 halbkreisförmig ausgestaltet werden. Nachteilhaft ist lediglich eine scharfkantige, quaderförmige Struktur des Vorsprungs 18, da in diesem Fall ein Herausdrehen des Drehverschlusses aus der Montage- und/oder Verriegelungsposition über die Quaderkante erfolgen müsste, was bei wiederholtem Verdrehen des Drehverschlusses zu Verschleiß an der Quaderkante und/oder der axialen Vertiefung 30 führen kann.

### Bezugszeichenliste

- 1: Bauteil 1
- 1a: Oberfläche von Bauteil 1
- 2: Bauteil 2
- 3: Bauteil 3
- 3a: Oberfläche von Bauteil 3
- 3b: nicht-rotationssymmetrische Durchgangsöffnung von Bauteil 3
- 10: Verschlusselement
- 11: erste Anlagefläche
- 12: zweite Anlagefläche
- 13: Verbindungszapfen
- 14: Drehachse
- 15: Rastmulde
- 16: Aussparung
- 17: Abschrägung
- 18: Vorsprung
- 19: Sockel
- 20: Führungselement
- 21: Führungskanal
- 22: seitliche Aussparung des Führungselements
- 23: Rastnase
- 24: Rastvorsprünge
- 25: Oberseite des Führungselements
- 26: Unterseite des Führungselements
- 27: viertelkreisförmige Aussparung
- 28: Versteifungsstege
- 29: Aussparungen
- 30: axiale Vertiefung

## Patentansprüche

1. Drehverschluss, insbesondere Vierteldrehverschluss, für das lösbare Verbinden von wenigstens zwei, insbesondere plattenförmigen, Bauteilen (1, 2, 3), die jeweils wenigstens eine Durchgangsöffnung aufweisen, wobei zumindest eine der Durchgangsöffnungen (3b) nicht rotationssymmetrisch ist,
mit einem Verschlusselement (10), das eine erste Anlagefläche (11), eine zweite Anlagefläche (12), und einen um eine Drehachse (14) drehbaren Verbindungszapfen (13) aufweist, der die beiden Anlageflächen (11, 12) voneinander beabstandet miteinander verbindet und mittig mit der ersten und zweiten Anlagefläche (11, 12) verbunden ist, wobei die Anlageflächen (11, 12) von der Drehachse des Verbindungszapfens (13) radial von diesem wegragen,
**dadurch gekennzeichnet, dass** der Drehverschluss zusätzlich wenigstens ein Führungselement (20) aufweist, das einen sich entlang der Drehachse (14) des Verbindungszapfens (13) erstreckenden Führungskanal (21) aufweist, wobei in dem Führungskanal (21) der Verbindungszapfen (13) drehbar gelagert ist, wobei eine der Anlageflächen (11, 12) aus einer Montageposition durch eine relative Drehbewegung des Verschlusselements (10) zu dem Führungselement (20) in eine Verriegelungsposition verschwenkt werden kann, wobei diese verschwenkbare Anlagefläche (11, 12) in der Montageposition innerhalb einer von der nicht-rotationssymmetrischen Durchgangsöffnung (3b) beschriebenen Umhüllenden liegt und in der Verriegelungsposition außerhalb einer von der nicht-rotationssymmetrischen Durchgangsöffnung (3b) beschriebenen Umhüllenden liegt, wobei an dem Verschlusselement (10) und/oder dem Führungselement (20) ein Vorsprung (18) ausgebildet ist, der in eine am Führungselement (20) und/oder am Verschlusselement (10) vorgesehene, insbesondere viertelkreisförmige, Aussparung (27) eingreift und/oder wobei der Führungskanal (21) mittig in dem Führungselement (20) angeordnet ist.

2. Drehverschluss gemäß Anspruch 1, **dadurch gekennzeichnet, dass** die nicht-rotationssymmetrische Durchgangsöffnung (3b) und die verschwenkbare Anlagefläche (11, 12) entlang der Drehachse (14) des Verbindungszapfens (13) betrachtet in der Montageposition im Wesentlichen deckungsgleich sind.

3. Drehverschluss nach einem der vorhergehenden Ansprüche, **dadurch gekennzeichnet, dass** das wenigstens eine Führungselement (20) in die übereinanderliegenden Durchgangsöffnungen der wenigstens zwei Bauteile (1, 2, 3) eingreift und/oder an die Kontur der zumindest einen nicht-rotationssymmetrischen Durchgangsöffnung (3b) angepasst ist.

4. Drehverschluss nach einem der vorhergehenden Ansprüche, **dadurch gekennzeichnet, dass** die nicht-rotationssymmetrische Durchgangsöffnung (3b) und die verschwenkbare Anlagefläche (11, 12) Flächenabschnitte aufweisen, die von der Drehachse (14) des Verbindungszapfens (13) in einer ersten Richtung stärker wegragen als in einer zweiten Richtung.

5. Drehverschluss nach einem der vorhergehenden Ansprüche, **dadurch gekennzeichnet, dass** die nicht-rotationssymmetrische Durchgangsöffnung (3b) und die verschwenkbare Anlagefläche (11, 12) entlang der Drehachse (14) des Verbindungszapfens (13) betrachtet im Wesentlichen einen rechteckigen, ellipsenförmigen, oder dreieckigen Querschnitt aufweist.

6. Drehverschluss nach einem der vorhergehenden Ansprüche, **dadurch gekennzeichnet, dass** die erste Anlagefläche (11) zur Anlage auf der Oberseite (1a) eines ersten Bauteils (1) oder zur Anlage auf einer, insbesondere scheibenförmigen, Oberseite (25) des Führungselements (20) ausgestaltet ist und/oder die zweite Anlagefläche (12) zur Anlage auf der Unterseite (3a) eines zweiten Bauteils (3) oder zur Anlage auf einer, insbesondere scheibenförmigen, Unterseite (26) des Führungselements (20) ausgestaltet ist.

7. Drehverschluss nach einem der vorherigen Ansprüche, **dadurch gekennzeichnet, dass** das wenigstens eine Führungselement (20) und die verschwenkbare Anlagefläche (11, 12) entlang der Drehachse (14) des Verbindungszapfens (13) betrachtet in der Montageposition im Wesentlichen deckungsgleich sind.

8. Drehverschluss nach einem der vorherigen Ansprüche, **dadurch gekennzeichnet, dass** die erste und/oder zweite Anlagefläche (11, 12) durch eine Scheibe, insbesondere eine Kreisscheibe, gebildet ist/sind.

9. Drehverschluss nach einem der vorherigen Ansprüche, **dadurch gekennzeichnet, dass** zwischen der ersten Anlagefläche (11) und der zweiten Anlagefläche (12) wenigstens ein elastisch verformbares Element vorgesehen ist.

10. Drehverschluss nach einem der vorherigen Ansprüche, **dadurch gekennzeichnet, dass** die Aussparung (27) zumindest eine axiale Vertiefung (30) aufweist, welche derart auf den Vorsprung (18) abgestimmt ist, dass ein Herausdrehen des Drehverschlusses aus der Montage- und/oder Verriegelungsposition erschwert wird.

11. Drehverschluss nach Anspruch 10, **dadurch gekennzeichnet, dass** der Vorsprung (18) parallel oder orthogonal zur Längsachse einer nicht-rotationsförmigen ersten und/oder zweiten Anlagefläche (11, 12) ausgerichtet ist.

12. Drehverschluss nach einem der vorherigen Ansprüche, **dadurch gekennzeichnet, dass** an dem Verschlusselement (10) und/oder dem Führungselement (20) wenigstens eine Rastnase (23) vorgesehen ist, die in wenigstens eine am Führungselement (20) und/oder am Verschlusselement (10) vorgesehene Rastmulde (15) in der Montageposition und/oder der Verriegelungsposition eingreift.

13. Drehverschluss nach einem der vorherigen Ansprüche, **dadurch gekennzeichnet, dass** das Führungselement (20) aus einem elastisch verformbaren Material besteht.

14. Drehverschluss nach einem der vorherigen Ansprüche, **dadurch gekennzeichnet, dass** der Verbindungszapfen (13) in dem Führungskanal (21) des Führungselements (20) festklemmbar, insbesondere einklipsbar, ist.

15. Drehverschluss nach einem der vorherigen Ansprüche, **dadurch gekennzeichnet, dass** das Führungselement (20) seitliche Rastmittel (24), insbesondere Rasthaken, aufweist.

## Claims

1. Turn-lock fastener, in particular quarter-turn-lock fastener, for releasably connecting at least two, in particular plate-shaped, components (1, 2, 3) which each comprise at least one through-opening, wherein at least one of the through-openings (3b) is not rotationally symmetrical,
having a closure element (10) comprising a first abutment surface (11), a second abutment surface (12) and a connecting pin (13), which can rotate about an axis of rotation (14) and connects the two abutment surfaces (11, 12) to one another spaced apart from one another and is connected centrally to the first and second abutment surface (11, 12), wherein the abutment surfaces (11, 12) project radially away from the axis of rotation of the connecting pin (13),
**characterized in that in that** the turn-lock fastener additionally comprises at least one guide element (20) having a guide channel (21) which extends along the axis of rotation (14) of the connecting pin (13), wherein the connecting pin (13) is rotatably mounted in the guide channel (21), wherein one of the abutment surfaces (11, 12) can be pivoted from an assembly position into a locking position by a relative rotational movement of the locking element (10) with respect to the guide element (20), wherein said pivotable abutment surface (11, 12) lies inside an envelope described by the non-rotationally symmetrical through-opening (3b) in the assembly position and outside an envelope described by the non-rotationally symmetrical through-opening (3b) in the locking position, wherein a projection (18) is configured on the closure element (10) and/or the guide element (20) which engages in an, in particular quarter-circular, recess (27) provided on the guide element (20) and/or on the closure element (10) and/or wherein the guide channel (21) is disposed centrally in the guide element (20).

2. Turn-lock fastener according to Claim 1, **characterized in that,** in the assembly position viewed along the axis of rotation (14) of the connecting pin (13), the non-rotationally symmetrical through-opening (3b) and the pivotable abutment surface (11, 12) are substantially congruent.

3. Turn-lock fastener according to any one of the preceding claims, **characterized in that** the at least one guide element (20) engages in the superposed through-openings of the at least two components (1, 2, 3) and/or is adapted to the contour of the at least one non-rotationally symmetrical through-opening (3b).

4. Turn-lock fastener according to any one of the preceding claims, **characterized in that** the non-rotationally symmetrical through-opening (3b) and the pivotable abutment surface (11, 12) comprise surface portions that project away from the axis of rotation (14) of the connecting pin (13) more sharply in a first direction than in a second direction.

5. Turn-lock fastener according to any one of the preceding claims, **characterized in that,** viewed along the axis of rotation (14) of the connecting pin (13), the non-rotationally symmetrical through-opening (3b) and the pivotable abutment surface (11, 12) have a substantially rectangular, elliptical or triangular cross-section.

6. Turn-lock fastener according to any one of the preceding claims, **characterized in that** the first abutment surface (11) is designed to rest on the upper side (1a) of a first component (1) or to rest on an, in particular disc-shaped, upper side (25) of the guide element (20) and/or the second abutment surface (12) is designed to rest on the underside (3a) of a second component (3) or to rest on an, in particular disc-shaped, underside (26) of the guide element (20).

7. Turn-lock fastener according to any one of the previous claims, **characterized in that,** in the assembly position viewed along the axis of rotation (14) of the connecting pin (13), the at least one guide element (20) and the pivotable abutment surface (11, 12) are substantially congruent.

8. Turn-lock fastener according to any one of the previous claims, **characterized in that** the first and/or second abutment surface (11, 12) is/are formed by a disc, in particular a circular disc.

9. Turn-lock fastener according to any one of the previous claims, **characterized in that** at least one elastically deformable element is provided between the first abutment surface (11) and the second abutment surface (12) .

10. Turn-lock fastener according to any one of the previous claims, **characterized in that** the recess (27) comprises at least one axial depression (30) which matches the projection (18) such that rotation of the turn-lock fastener out of the assembly and/or locking position is made more difficult.

11. Turn-lock fastener according to Claim 10, **characterized in that** the projection (18) is aligned parallel or orthogonal to the longitudinal axis of a non-rotationally shaped first and/or second abutment surface (11, 12).

12. Turn-lock fastener according to any one of the previous claims, **characterized in that** at least one latching lug (23) is provided on the locking element (10) and/or the guide element (20), which engages in at least one latching depression (15) provided on the guide element (20) and/or on the locking element (10) in the assembly position and/or the locking position.

13. Turn-lock fastener according to any one of the previous claims, **characterized in that** the guide element (20) is made of an elastically deformable material.

14. Turn-lock fastener according to any one of the previous claims, **characterized in that** the connecting pin (13) can be clamped, in particular snapped, into the guide channel (21) of the guide element (20).

15. Turn-lock fastener according to any one of the previous claims, **characterized in that** the guide element (20) comprises lateral latching means (24), in particular latching hooks.

## Revendications

1. Organe de fixation par rotation, notamment quart de tour, pour le raccord amovible d'au moins deux composants (1, 2, 3), notamment en forme de plaque, présentant chacun au moins une ouverture de passage, au moins une des ouvertures de passage (3b) n'étant pas symétrique en rotation,
comportant un élément de verrouillage (10) présentant une première surface de contact (11), une deuxième surface de contact (12) et une broche de liaison (13) qui est susceptible de tourner sur un axe de rotation (14) et qui relie l'une à l'autre les deux surfaces de contact (11, 12) espacées l'une de l'autre en étant reliée de manière centrée auxdites première et deuxième surfaces de contact (11, 12), lesdites surfaces de contact (11, 12) faisant saillie radialement de la broche de liaison (13) à partir de son axe de rotation,
**caractérisé en ce que** l'organe de fixation présente en outre au moins un élément de guidage (20) présentant un canal de guidage (21) s'étendant selon l'axe de rotation (14) de la broche de liaison (13), ladite broche de liaison (13) étant installée rotative dans ledit canal de guidage (21), l'une des surfaces de contact (11, 12) pouvant passer d'une position de montage à une position de verrouillage par pivotement grâce à une rotation relative de l'élément de verrouillage (10) par rapport à l'élément de guidage (20), cette surface de contact pivotante (11, 12) se trouvant, en position de montage, à l'intérieur d'une enveloppe définie par l'ouverture de passage (3b) non symétrique en rotation et, en position de verrouillage, en dehors d'une enveloppe définie par l'ouverture de passage (3b) non symétrique en rotation, une saillie (18) étant constituée sur l'élément de verrouillage (10) et/ou sur l'élément de guidage (20), laquelle s'enclenche dans un évidement (27), notamment d'une forme en quart d'angle, prévu dans l'élément de guidage (20) et/ou l'élément de verrouillage (10), et/ou ledit canal de guidage (21) étant agencé centré dans l'élément de guidage (20).

2. Organe de fixation par rotation selon la revendication 1, **caractérisé en ce que** l'ouverture de passage (3b) non symétrique en rotation et la surface de contact pivotante (11, 12), vues le long de l'axe de rotation (14) de la broche de liaison (13), sont sensiblement congruentes en position de montage.

3. Organe de fixation par rotation selon l'une quelconque des revendications précédentes, **caractérisé en ce que** l'au moins un élément de guidage (20) s'enclenche dans les ouvertures de passage superposées des au moins deux composants (1, 2, 3) et/ou est adapté au contour de l'au moins une ouverture de passage (3b) non symétrique en rotation.

4. Organe de fixation par rotation selon l'une quelconque des revendications précédentes, **caractérisé en ce que** l'ouverture de passage (3b) non symétrique en rotation et la surface de contact pivotante (11, 12) présentent des pans de surface faisant plus fortement saillie à partir de l'axe de rotation (14) de la broche de liaison (13) dans une première direction que dans une deuxième direction.

5. Organe de fixation par rotation selon l'une quelconque des revendications précédentes, **caractérisé en ce que** l'ouverture de passage (3b) non symétrique en rotation et la surface de contact pivotante (11, 12), vues le long de l'axe de rotation (14) de la broche de liaison (13), présentent une section transversale sensiblement rectangulaire, ellipsoïdale ou triangulaire.

6. Organe de fixation par rotation selon l'une quelconque des revendications précédentes, **caractérisé en ce que** la première surface de contact (11) est conçue pour un contact avec la face supérieure (la) d'un premier composant (1) ou pour un contact avec une face supérieure (25), notamment en forme de disque, de l'élément de guidage (20), et/ou la deuxième surface de contact (12) est conçue pour un contact avec la face inférieure (3a) d'un deuxième composant (3) ou pour un contact avec la face inférieure (26), notamment en forme de disque, de l'élément de guidage (20).

7. Organe de fixation par rotation selon l'une des revendications précédentes, **caractérisé en ce que** l'au moins un élément de guidage (20) et la surface de contact pivotante (11, 12), vus le long de l'axe de rotation (14) de la broche de liaison (13), sont sensiblement congruents en position de montage.

8. Organe de fixation par rotation selon l'une des revendications précédentes, **caractérisé en ce que** la première et/ou la deuxième surface de contact (11, 12) sont constituées par un disque, notamment un disque circulaire.

9. Organe de fixation par rotation selon l'une des revendications précédentes, **caractérisé en ce qu'**il est prévu au moins un élément élastiquement déformable entre la première surface de contact (11) et la deuxième surface de contact (12) .

10. Organe de fixation par rotation par rotation selon l'une des revendications précédentes, **caractérisé en ce que** l'évidement (27) présente au moins un renfoncement axial (30) qui est coordonné à la saillie (18) de manière à rendre plus difficile une sortie de l'organe de fixation de la position de montage et/ou de verrouillage sous l'effet d'une rotation.

11. Organe de fixation par rotation selon la revendication 10, **caractérisé en ce que** la saillie (18) est orientée parallèlement ou orthogonalement à l'axe longitudinal d'une première et/ou deuxième surface de contact (11, 12) de forme non rotative.

12. Organe de fixation par rotation selon l'une des revendications précédentes, **caractérisé en ce qu'**il est prévu au moins un ergot d'encliquetage (23) sur l'élément de verrouillage (10) et/ou sur l'élément de guidage (20), lequel ergot s'enclenche, en position de montage et/ou en position de verrouillage, dans au moins un creux d'encliquetage (15) prévu dans l'élément de guidage (20) et/ou l'élément de verrouillage (10).

13. Organe de fixation par rotation selon l'une des revendications précédentes, **caractérisé en ce que** l'élément de guidage (20) se compose d'un matériau élastiquement déformable.

14. Organe de fixation par rotation selon l'une des revendications précédentes, **caractérisé en ce que** la broche de liaison (13) peut être bloquée, notamment par clipsage, dans le canal de guidage (21) de l'élément de guidage (20).

15. Organe de fixation par rotation selon l'une des revendications précédentes, **caractérisé en ce que** l'élément de guidage (20) présente des moyens d'encliquetage (24), notamment des crochets d'encliquetage.
